# FASCICULE DE BREVET EUROPEEN

(11) **EP 3 350 967 B1**
(45) Date de publication et mention de la délivrance du brevet: **28.08.2019**
(21) Numéro de dépôt: 16777722.6
(22) Date de dépôt: 14.09.2016
(51) Int. Cl.: H04L 12/28, H04L 12/24

(54) **PROCÉDÉ DE CONFIGURATION ET PROCÉDÉ DE CONTRÔLE D'UNE INSTALLATION DOMOTIQUE**
VERFAHREN ZUR KONFIGURATION UND VERFAHREN ZUR STEUERUNG EINER HEIMAUTOMATIONSVORRICHTUNG
METHOD FOR CONFIGURING AND METHOD FOR CONTROLLING A HOME AUTOMATION APPARATUS

(30) Priorité: 16.09.2015 FR 1558667
(43) Date de publication de la demande: 25.07.2018
(73) Titulaire: Overkiz, 74370 Metz-Tessi (FR)
(72) Inventeur: POGNANT, Sylvain, 74600 Seynod (FR)
(74) Mandataire: Verriest, Philippe
(86) Numéro de dépôt international: PCT/FR2016/052309
(87) Numéro de publication internationale: WO 2017/046512

(56) Documents cités:
- EP-A1- 1 936 510
- EP-A1- 2 680 496
- EP-A2- 2 252 042
- US-A1- 2004 210 652
- US-A1- 2011 228 665
- US-A1- 2014 095 684

## Description

La présente invention concerne un procédé de configuration et un procédé de contrôle d'une installation domotique.

Une installation domotique d'un bâtiment peut comprendre une pluralité de dispositifs domotiques. Il est connu de procéder à la configuration, à la commande et/ou à la supervision de ladite installation en utilisant une unité centrale de commande qui communique avec un ou plusieurs dispositifs domotiques.

La publication de brevet US2011/228665 décrit un procédé de configuration d'une installation domotique comprenant une pluralité de dispositifs domotiques et une pluralité d'unités centrales de commande.

Dans le cas de bâtiments de grande taille, il peut être nécessaire soit de recourir à des répéteurs, soit de procéder à l'installation de plusieurs unités centrales afin de permettre d'accéder à l'ensemble des dispositifs domotiques faisant partie de l'installation. Par ailleurs, dans le cas d'installations domotiques hétéroclites, dans lesquels de nombreux types de dispositifs domotiques doivent être contrôlés, il peut également être souhaitable d'utiliser plusieurs unités centrales de commandes qui permettent de communiquer dans les différents protocoles de communication utilisés par les dispositifs domotiques.

Si la présence de ces différentes unités permet de communiquer avec l'ensemble des dispositifs, l'architecture ainsi constituée est complexe à maîtriser pour un utilisateur.

La présente invention a pour but de résoudre tout ou partie des inconvénients mentionnés ci-dessus.

A cet effet, la présente invention concerne un procédé de configuration d'une installation domotique, comprenant une pluralité de dispositifs domotiques et une pluralité d'unités centrales de commande; le procédé étant exécuté par une unité de gestion ou par un terminal mobile connecté(e) à l'installation domotique et comprenant les étapes suivantes :
i. Réception d'un message de configuration en provenance d'un utilisateur ou d'une application s'exécutant sur l'unité de gestion ou sur une autre unité de gestion connectée, le message comprenant une définition d'une expression conditionnelle définissant
   - une évaluation d'au moins une condition portant sur :
      - au moins une variable d'état d'au moins un dispositif domotique et/ou
      - au moins un temps ou une date ;
      et
   - un déclenchement conditionnel d'au moins une action;
ii. Détermination d'une liste comprenant au moins une unité centrale de commande apte
   - à évaluer l'au moins une condition et/ou
   - à déclencher l'au moins une action ;
iii. Génération d'au moins un module de code logiciel conditionnel permettant, lors de son exécution par l'au moins une unité centrale de commande comprise dans la liste, l'évaluation de l'au moins une condition et/ou le déclenchement de l'au moins une action;
iv. Envoi d'au moins un message de configuration comprenant une définition de l'au moins un module de code logiciel conditionnel à l'au moins une unité centrale de commande comprise dans la liste.

Par action, il peut être compris exécution d'au moins un commande définie optionnellement dans l'expression conditionnelle ; ou encore déclenchement d'un scénario ou d'un groupe de commandes communiquées préalablement à l'unité centrale de commande et identifié par un identifiant de groupe de commande ou de scénario ; dans ce cas, l'élément action de l'expression conditionnelle contient cet identifiant.

Le déclenchement de l'action peut être direct par l'unité centrale de commande) ou indirect, par envoi d'un message de notification ou de commande à destination de l'unité de gestion ou d'une autre unité centrale de commande.

On entend par scénario un ensemble de commandes comprenant au moins une commande destiné à au moins un dispositif domotique, ledit ensemble étant préenregistré dans au moins une unité centrale de commande, le scénario pouvant être déclenché sur la base d'une commande de l'utilisateur, d'un événement déclenché par la réalisation d'une condition sur le temps et/ou la date, ou encore d'une condition sur une variable d'état d'un dispositif domotique qui peut notamment être une mesure de capteur ou une variable d'état d'un dispositif domotique. Un scénario peut être identifié par un identifiant de scénario.

On entend par commande groupée ou groupe de commande un ensemble de commandes comprenant une pluralité de commandes destiné à un ou plusieurs dispositifs domotiques, la pluralité de commande étant destiné à être envoyé à au moins une unité centrale de commande pour une exécution à réception.

Tous les modules de code logiciel conditionnel peuvent être évalués du côté serveur car le serveur a une visibilité sur toutes les valeurs des variables d'états, les informations concernant les changement de valeur de ces variables étant communiquées par les unités centrales de commande. Par ailleurs, le serveur peut gérer les compteurs de temps nécessaires.

Toutefois, dans de nombreux cas il est possible de distribuer les traitements sur un ou plusieurs unités centrales de commande d'une installation de façon à économiser des ressources de calcul du côté serveur, ces traitements incluant :
- Le besoin de réévaluer des conditions lorsqu'une valeur de variable d'état change ;
- Le besoin de maintenir des compteurs de temps en exécution pour les diverses conditions basées sur le temps.

En considérant une large base d'utilisateurs, les ressources en temps de traitement et mémoire sur l'unité de gestion pour gérer les modules de code logiciel conditionnel en temps-réel deviennent importantes.

Les dispositions selon l'invention permettent une réduction significative de ces ressources par des dispositions spécifiques sur la gestion des modules de code logiciel conditionnel et leur distribution.

Une expression conditionnelle est considérée comme distribuée aussitôt qu'elle s'étend sur plusieurs éléments d'un système, les éléments étant constitué par des unités centrales de commandes ou un serveur / une unité de gestion :
- Soit la condition de l'expression conditionnelle dépend de variables d'état relatives à des dispositifs domotiques qui sont gérées par de multiples unités centrales de commandes indépendantes ;
- Soit les actions de l'expression conditionnelle s'étendent sur des dispositifs domotiques multiples rattachés à de multiples unités centrales de commande ;
- Soit la condition dépend d'au moins une variable d'état relative à au moins un dispositif domotique rattaché à au moins une première unité centrale de commande et l'au moins une action de l'expression conditionnelle concerne au moins un autre dispositif domotique rattaché à une autre unité électronique de commande.

Un module de code logiciel conditionnel est généré pour chaque unité centrale de commande comprise dans la liste, chaque module étant agencé pour réaliser l'évaluation de la partie de l'expression conditionnelle affectée à l'unité centrale de commande et optionnellement pour émettre au moins une notification à destination de l'unité de gestion et/ou d'une autre unité centrale de commande.

Lors de l'étape d'envoi d'un message de configuration, une propagation de la définition de l'expression conditionnelle est réalisée.

Cette propagation peut comprendre une partition des éléments de l'expression conditionnelle, les éléments de l'expression conditionnelle étant l'au moins une condition, et l'au moins une action sur les unités centrales sélectionnées. Ainsi, chaque unité centrale peut ne recevoir qu'une partie des éléments du l'expression sous forme d'un module de code logiciel conditionnel, le lien entre ces différents éléments distribués étant assuré par l'unité de gestion qui reçoit des notifications des unités centrales de commande exécutant les éléments et renvoie un message d'action à l'unité devant exécuter l'élément suivant du module.

Selon un aspect de l'invention, l'enregistrement du module de code logiciel conditionnel est réalisé sur l'unité de gestion en lien avec un identifiant de l' installation ou d'une entité représentative de l'installation.

Grâce aux dispositions de l'invention, il est possible d'utiliser des expressions conditionnelles impliquant plusieurs unités centrales de commandes au sein d'une même installation afin d'étendre le nombre de dispositifs domotiques contrôlables par une seule expression conditionnelle.

Il est à noter que l'on entend par dispositif domotique un équipement domotique et/ou un capteur, ou encore une partie d'équipement domotique ou une partie de capteur correspondant à un sous-ensemble fonctionnel.

Par ailleurs, on entend par message un élément d'information notifié ou réceptionné via un module de communication depuis un équipement extérieur, ou sous la forme d'un appel synchrone ou asynchrone, pouvant également correspondre à un appel de fonction local ou distant.

Par installation, on entend un ensemble comprenant une pluralité de dispositifs domotiques et une pluralité d'unités centrales de commande disposés dans un seul bâtiment ou sur une pluralité de lieux, chaque dispositif domotique étant relié à une unité centrale de commande parmi la pluralité d'unités centrales de commande, la pluralité d'unités centrales de commande formant un groupe sous le contrôle d'un utilisateur. Les dispositifs électroniques forment des groupes d'au moins un dispositif domotique rattaché à une unité centrale de commande.

Un même dispositif ou une même unité de commande peut appartenir à au moins deux installations différentes, éventuellement sous la responsabilité d'au moins deux utilisateurs différents. A titre d'exemple, un dispositif domotique correspondant à un système de chauffage peut être compris dans une première installation domotique comprenant un ensemble des dispositifs compris dans un logement, sous le contrôle d'un utilisateur occupant le logement, et dans une deuxième installation domotique comprenant un ensemble de dispositifs domotiques correspondant à des systèmes de chauffage disposés dans une pluralité de logement sous le contrôle d'un utilisateur administrateur des équipements de chauffage pour la pluralité de logements.

Par unité centrale de commande de l'installation domotique, on entend une unité électronique comprenant au moins une unité de traitement pour contenir et exécuter au moins un programme d'ordinateur, comprenant au moins module de communication destinée au contrôle et/ou à la commande d'au moins un dispositif domotique ou une unité électronique intégrée à un dispositif domotique et au moins un module de communication avec l'unité de gestion. Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API.

Selon un aspect de l'invention, l'unité de gestion est un serveur connecté à distance à l'au moins une installation domotique, par l'intermédiaire d'un réseau étendu.

Selon un autre aspect de l'invention, l'unité de gestion est une unité centrale destinée à être reliée à une ou plusieurs unités centrales de commande sur des réseaux privés ou locaux distincts, ou encore sur le même réseau local.

Selon un aspect de l'invention, l'application tierce peut être exécutée selon les cas sur le terminal utilisateur ou sur l'unité de gestion ou encore sur une autre unité de gestion connectée au terminal utilisateur ou à l'unité de gestion exécutant le procédé de commande.

Selon un aspect de l'invention, l'installation domotique est représentée par une entité représentative associée à un groupe de dispositif domotiques correspondant à la pluralité de dispositifs domotiques appartenant à l'installation.

Grâce à ces dispositions, l'interface présentée à l'utilisateur peut ainsi ajouter une couche d'abstraction pour cacher le rattachement effectif des dispositifs aux unités centrales de commande. L'interface représente ainsi les équipements domotiques, comme les volets, stores, systèmes HVAC ou d'éclairage, pilotables dans l'installation ainsi que les capteurs présents.

Ces dispositions sont obtenues sans communication entre les unités centrales de commande, mais simplement par le rattachement logique opéré lors de la configuration.

Selon un aspect de l'invention, l'entité représentative est associée à un groupe d'unités centrales de commande correspondant à la pluralité d'unités centrales de commande appartenant à l'installation.

Selon un aspect de l'invention, le procédé comprend en outre une étape d'Enregistrement de l'expression conditionnelle en lien avec un identifiant d'expression conditionnelle, et l'étape d'envoi de l'au moins un message de configuration comprenant la définition de l'au moins un module de code logiciel conditionnel est exécutée en lien avec l'identifiant d'expression conditionnelle.

Par identifiant d'expression conditionnelle, on entend un élément d'identification permettant d'établir un lien entre un module de code logiciel et une expression conditionnelle. Il est possible d'utiliser un identifiant unique ou un identifiant multiple, par exemple un identifiant par module de code logiciel, l'ensemble des identifiants étant enregistrés.

Selon un aspect de l'invention, l'unité de gestion détermine qu'une unité centrale de commande est apte à évaluer l'au moins une condition ou à exécuter l'au moins une action si :
- Au moins une des variables d'état d'un des dispositifs domotiques rattaché à ladite unité centrale de commande est utilisé dans la condition ; ou
- Au moins un des dispositifs domotiques rattaché à ladite unité centrale de commande est utilisé dans l'au moins une action.

Selon un aspect de l'invention, le procédé comprend en outre une étape de détermination d'un niveau de support fourni par l'au moins une unité centrale de commande pour un type du module de code logiciel conditionnel ; et la génération de l'au moins un module de code logiciel conditionnel est effectuée sur la base du niveau de support.

Selon un aspect de l'invention, les unités centrales de commande peuvent présenter différents niveaux de support pour les types d'expressions conditionnelles :
- Un support complet de l'expression conditionnelle : évaluation des conditions Cnd et déclenchement des actions;
- Un support complet pour l'évaluation des conditions ;
- Un support pour l'évaluation des conditions basées sur les valeurs de variables d'état seulement ;
- Un support pour l'évaluation des conditions temporelles seulement;
- Un support pour l'exécution des actions seulement;
- Un support pour l'envoi de messages de notification à destination de l'unité de gestion, indiquant que la condition est remplie ;
- Un support pour l'envoi de messages de commande ou de notification à destination d'autres unités centrales de commande, aptes à exécuter des action. Selon une possibilité, ces messages et leurs destinataires peuvent être définis par l'unité de gestion lors de l'étape de génération du module de code logiciel. Dans ce cas, l'unité centrale de commande envoyant le message de commande ou de notification déclenche l'action sans avoir besoin de connaître le rattachement des dispositifs domotiques ou l'action à exécuter. ;
- Aucun support.

La présente invention concerne également un procédé de configuration d'une installation domotique, comprenant une pluralité de dispositifs domotiques et une pluralité d'unités centrales de commande; le procédé étant exécuté par l'au moins une unité centrale de commande et comprenant les étapes du procédé selon la revendication 5.

Selon un aspect de l'invention, l'au moins une unité de commande est configurée de façon à envoyer un message de notification à destination de l'unité de gestion ou du terminal mobile indiquant que l'au moins une condition du module de code logiciel conditionnel CCM a été validée et/ou que la ou les actions ont été déclenchées.

Selon un aspect de l'invention, le procédé de configuration est exécuté par une première unité centrale de commande, et le message de configuration comprend
- une définition d'au moins un message de notification ou de commande; et
- au moins un identifiant d'une deuxième unité centrale de commande de l'installation domotique,
et la première unité centrale de commande est configurée de façon à envoyer le message de notification ou de commande à destination de la deuxième unité centrale de commande, lorsque l'au moins une condition a été validée.

La présente invention concerne également un procédé de contrôle d'une installation domotique selon la revendication 8.

Selon un aspect de l'invention, dans le cas ou l'unité centrale de commande reçoit un module de code logiciel conditionnel concernant seulement l'action, le déclenchement de cette action peut être obtenu sans la connaissance par l'unité en question de l'évaluation de la condition. Le déclenchement est réalisé par la référence à l'identifiant d'expression conditionnelle.

Selon un aspect de l'invention, le module de code logiciel conditionnel est préalablement enregistré en lien avec un identifiant d'expression conditionnelle ; et comprend en outre une étape d'envoi d'un message de notification à destination d'une unité de gestion indiquant que l'au moins une condition du module de code logiciel conditionnel a été validée lors de son évaluation et/ou que l'au moins une action a été exécutée, en lien avec l' identifiant d'expression conditionnelle.

Selon un aspect de l'invention, une première unité centrale de commande a été préalablement configurée pour réaliser l'évaluation de l'au moins une condition, le procédé comprenant en outre une étape d'envoi d'un message de notification ou de commande à destination d'une deuxième unité centrale de commande de l'installation par la première unité centrale de commande, lorsque l'au moins une condition a été validée par la première unité centrale de commande.

Selon un aspect de l'invention, le message de notification contient des instructions pour l'exécution d'une action pour un dispositif rattaché à la deuxième unité centrale de commande, sur réception d'un message de notification indiquant que la condition Cnd est validée.

Selon un autre aspect de l'invention, le message de notification comprend une valeur de variable d'état.

Selon un autre aspect de l'invention, le message de notification comprend ou de commande comprend une commande explicite à destination de la deuxième unité centrale de commande.

La présente invention concerne également un procédé de contrôle d'une installation domotique, l'installation domotique comprenant une pluralité de dispositifs domotiques, et une pluralité d'unités centrales de commande ; le procédé étant exécuté par une unité de gestion ou par un terminal connecté(e) à l'au moins une installation domotique, sur la base d'une expression conditionnelle définissant une évaluation d'au moins une condition portant sur au moins une variable d'état d'au moins un dispositif domotique et/ou sur au moins un temps ou une date et un déclenchement conditionnel d'au moins une action et comprenant les étapes telles que définies à la revendication 11.

Selon un aspect de l'invention, lors de l'étape iii, l'unité centrale de commande émettrice du message de notification est exclue de la sélection.

Selon un aspect de l'invention, dans le cas d'un module de code logiciel conditionnel qui serait seulement basé sur le temps, lors de l'étape iii, seules les unités centrales qui n'ont pas de support pour les modules de code logiciel conditionnel basés sur le temps sont conservées dans la sélection.

Selon un aspect de l'invention, le message de notification reçue à l'étape i fournit un identifiant de l'expression conditionnelle ; et la définition complète de l'expression conditionnelle est préalablement stockée en lien avec l'identifiant, l'identification d'une définition complète de l'expression conditionnelle pouvant être réalisée grâce à l'identifiant de l'expression conditionnelle fourni dans le message de notification

Selon un aspect de l'invention, le message d'action envoyé à l'étape iv comprend l'identifiant de l'expression conditionnelle le procédé comprenant en outre l'étape suivante :
- Détermination, d'un résultat de l'au moins une action , en aggrégant une pluralité de notifications reçues dans une pluralité de messages de notification reçus, sur la base de l'identifiant unique de l'expression conditionnelle.

Selon un aspect de l'invention, le résultat peut être communiqué ou consulté par un utilisateur ou par une application tierce dans une étape ultérieure.

Selon un aspect de l'invention, il est possible par exemple pour l'unité exécutant l'évaluation de l'expression conditionnelle d'adjoindre un identifiant d'exécution à l'identifiant unique de module de code logiciel conditionnel pour différencier les différentes exécutions de ce module, cet identifiant d'exécution étant propagé aux autres unités concernées dans les messages de notification ou d'action.

La présente invention concerne également un produit programme d'ordinateur comprenant des instructions de code agencées pour mettre en oeuvre les étapes d'un procédé tel que décrit précédemment, lorsque ledit programme est exécuté par un processeur d'une unité de gestion ou d'une unité centrale de commande.

La présente invention concerne également un système comprenant une unité de gestion ou un terminal mobile agencé(e) pour exécuter le procédé tel que décrit précédemment, de façon connectée à au moins une unité centrale de commande d'une installation domotique, l'au moins une unité centrale de commande étant agencée pour exécuter le procédé tel que décrit précédemment.

Les différents aspects définis ci-dessus non incompatibles peuvent être combinés.

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1 ainsi qu'un serveur destiné à être connecté à un terminal utilisateur ;
La figure 3 est un schéma représentant les relations entre une entité représentative d'une installation domotique, les unités centrales de commande et les dispositifs de l'installation domotique.
La figure 4 est un schéma illustrant un mode de mise en oeuvre d'un procédé de configuration d'une installation domotique selon l'invention.
La figure 5 est un schéma illustrant un mode de mise en oeuvre d'un procédé de contrôle d'une installation domotique selon l'invention.
La figure 6 est un schéma illustrant un deuxième mode de mise en oeuvre d'un procédé de contrôle d'une installation domotique selon l'invention.

Dans la description détaillée qui va suivre des figures définies ci-dessus, les mêmes éléments ou les éléments remplissant des fonctions identiques pourront conserver les mêmes références de manière à simplifier la compréhension de l'invention.

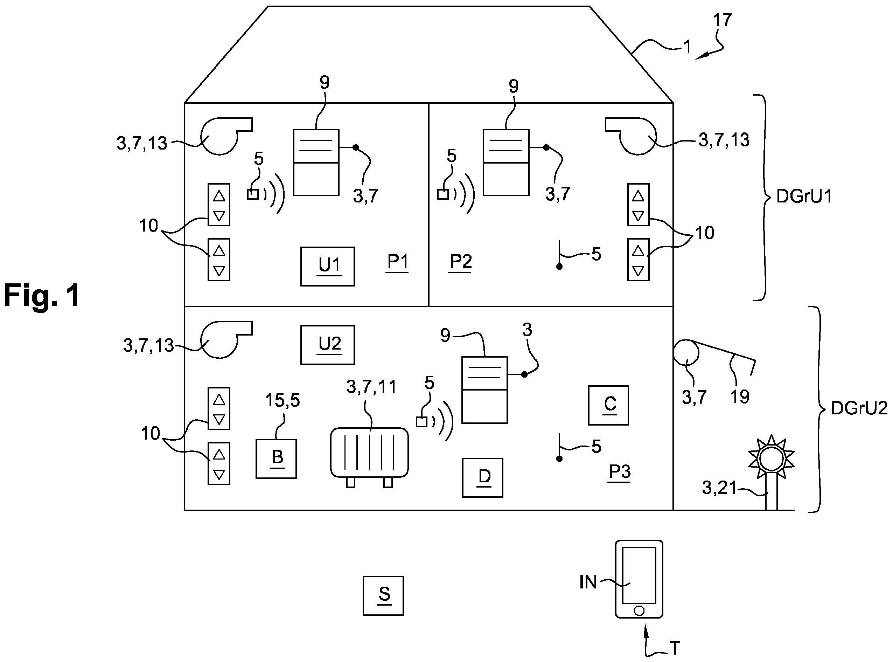

Comme illustré à la figure 1, un bâtiment 1 comprend à titre d'exemple trois pièces P1, P2, P3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique 17 peut également comprendre un point de commande 15 d'un actionneur 7, comme un boîtier de commande B sans fil pour le volet roulant 9.

L'installation domotique 17 peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique 17.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

L'installation domotique 17 comprend une pluralité d'unités centrales de commande U1, U2. En particulier et à titre d'exemple, deux unités centrales de commande U1, U2 sont représentées sur la figure 1.

Chaque unité centrale de commande U1, U2 est agencée pour commander et/ou contrôler une partie des dispositifs D de l'installation 17 formant un groupe DGrU1, DGrU2. A titre d'exemple, sur la figure 1, l'unité centrale de commande U1 est en charge des dispositifs D disposés dans les pièces P1 et P2 du premier étage du bâtiment, alors que l'unité centrale de commande U2 est en charge des dispositifs D disposés dans la pièce P3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

Les dispositifs D faisant partie d'un groupe DGrU1, DGrU2 appartiennent à un réseau local géré par une unité centrale de commande U1 ou U2 au sein de l'installation domotique et communiquent selon un protocole de communication local avec l'unité centrale de commande U1 ou U2. Ils ont une adresse locale dans ce réseau. Les dispositifs logiques D peuvent être modélisés comme des noeuds ou points d'extrémité dans le réseau local.

Le système d'adressage local peut être hiérarchique ou à plat, le format d'adresse pouvant être numérique ou alphanumérique.

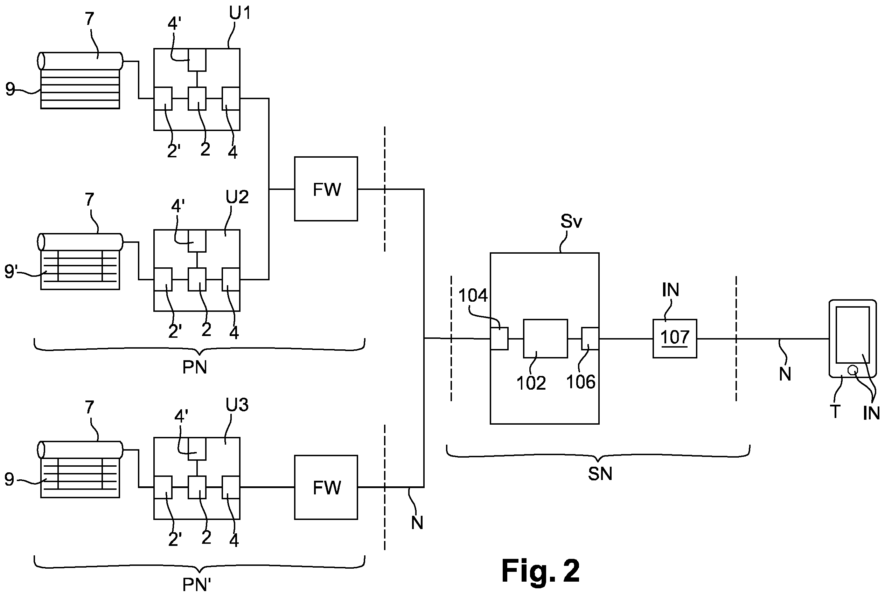

Comme cela est représenté sur la figure 2, chaque unité centrale de commande U est agencée pour communiquer avec un serveur Sv.

Les unités centrales de commande U1, U2, U3 sont disposées sur un réseau privé PN, PN', dont l'accès est en général protégé par un pare-feu FW. En particulier, dans l'exemple représenté sur la figure 2, deux unités centrales de commandes U1, U2 sont disposées sur un premier réseau privé correspondant à une première installation domotique, alors qu'une troisième unité centrale de commande U3 est disposée sur un second réseau privé PN', indépendant du réseau privé PN correspondant à une deuxième installation domotique. Le serveur Sv est également disposé sur un réseau privé SN. Le réseau privé PN est relié à un réseau étendu N, par exemple Internet. Bien entendu, le serveur Sv est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'un mémoire vive, et d'une puce Ethernet.

L'unité centrale de commande U comprend, en outre, au moins un module de communication 2' destinée au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1.

A titre d'exemple, le module de communication 2' peut être agencé pour mettre en oeuvre par exemple un ou plusieurs des protocoles Z-Wave, EnOcean, IO Homecontrol, Somfy RTS, KNX, MODBUS, Wavenis, Philips HUE.

Selon une autre possibilité, par exemple dans le cadre de systèmes d'alarme, l'unité centrale de commande peut être intégrée dans le dispositif domotique.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U comprend, en outre, un module de communication 4 avec le serveur Sv. Le serveur Sv permet la commande et/ou le contrôle à distance et comprend une ou plusieurs unités de traitement 102 agencée pour contenir et exécuter un deuxième programme d'ordinateur.

Chaque unité centrale de commande U comprend, en outre, un module de communication 4' pour communiquer selon un protocole de communication local, par exemple Bluetooth, Zigbee ou Wifi, avec un terminal de communication mobile T. Le terminal de communication T peut contenir et exécuter un logiciel d'application APP.

Dans certaines applications, une unité centrale de commande U peut communiquer avec l'unité de gestion à travers un serveur intermédiaire, par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle IN permettant à un utilisateur de contrôler à distance l'installation domotique.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T communiquant par le réseau étendu N. Le terminal de communication mobile T peut être, par exemple, un téléphone intelligent ou une tablette. Le terminal de communication mobile T peut être le même ou un terminal du même type que celui avec lequel l'unité centrale de commande U communique en local au moyen du module de communication 4', ou un terminal différent. Nous désignerons indifféremment ces terminaux mobiles par la référence T.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

Les figures 1 et 2 décrivent une installation 17 qui comprend un ensemble de dispositifs D et une pluralité d'unités centrales de commande U1, U2, disposées dans un même logement, un même bâtiment ou un même lieu physique.

Selon une autre possibilité, une installation 17 au sens de l'invention peut comprendre des dispositifs domotiques disposés sur une pluralité de lieux, avec au moins une unité centrale de commande sur chacun de ces lieux à laquelle sont rattachés les dispositifs domotiques, les unités centrales de commande U de l'installation étant placées sous le contrôle d'un utilisateur.

A titre d'exemple, une telle installation peut comprendre un ensemble de dispositifs domotiques constitués par des systèmes de chauffage répartis dans un ensemble de logements ou de locaux tertiaires, rattaché à un ensemble d'unité centrales de commande U, l'ensemble de dispositifs domotiques étant destiné à être commandé par un utilisateur spécifiques en charge du chauffage pour ledit ensemble de logements ou de locaux tertiaires.

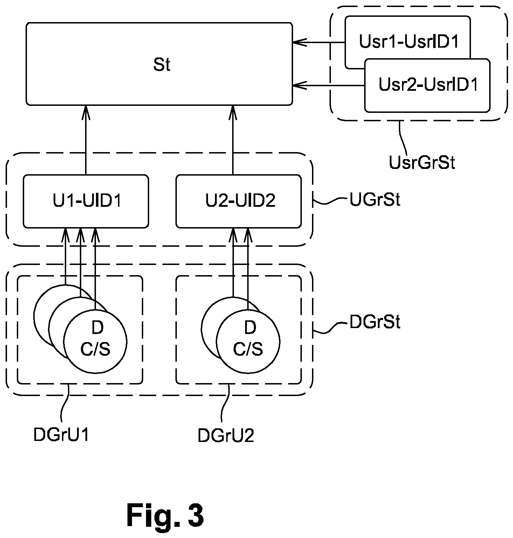

Nous allons à présent décrire, en référence à la figure 3, la représentation de l'installation 17 par une entité représentative St sur le serveur Sv, dans le cas où l'installation comprend de multiples unités centrales de commandes U.

Le système selon l'invention rattache plusieurs unités centrales de commande U à un seul objet St représentant une installation 17 par une configuration au niveau du serveur Sv.

Le serveur Sv peut ainsi présenter à l'utilisateur l'installation 17 comme un seul ensemble de dispositifs D à l'utilisateur, par exemple par l'intermédiaire d'une Interface de Programmation d'Application ou API, dans lequel chaque dispositif D peut accepter un ensemble donné de commandes C ou présenter des variables d'état S.

Le serveur Sv peut également utiliser un système ou couche d'abstraction pour les commandes C et les variables d'état S pour proposer une API plus générique et indépendante du protocole de communication utilisée par un dispositif D donné.

L'identification de l'entité représentative St de l'installation peut être selon un mode de réalisation réalisée par l'un quelconque des identifiants UID de l'une des unités centrales de commande U présente dans l'installation, par un identifiant de l'installation ou de l'utilisateur.

Ainsi, pour simplifier la désignation d'une installation dans les APIs publiques, il suffit que les utilisateurs de ces APIs fournissent un identifiant unique attachée à l'entité représentative St de l'installation 17.

De façon interne au serveur, un identifiant unique de l'entité représentative St de l'installation 17 peut exister pour faciliter l'implémentation.

Ainsi, l'entité représentative St peut être associée à une liste ou groupe de dispositifs DGrSt regroupant les dispositifs contenus dans les différents groupes DGrU1, DGrU2 attachés à chaque unité centrale de commande U1, U2, et à un groupe UGrSt des identifiants UID des unités centrales de commandes concernées U. Les dispositifs sont identifiés par un identifiant unique. Une entité représentative d'une installation domotique peut être associée avec un utilisateur donné Usr1, identifié par un identifiant UsrID, correspondant par exemple à une combinaison login et mot de passe ou avec un groupe d'utilisateurs donné UsrGrSt.

Un exemple de mode de réalisation d'un identifiant unique d'un dispositif DURL va être à présent décrite.

Selon ce mode de réalisation, l'identifiant unique d'un dispositif DURL comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemld si le dispositif comprend plusieurs sous-ensemble fonctionnels ou sous-systèmes qui peuvent être adressés séparément. Les dispositifs qui ne comprennent qu'un ensemble fonctionnel ne présentent pas d'extension d'identification d'un sous-système.

Ainsi, la forme de l'identifiant unique d'un dispositif DURL peut être la suivante :

```
           <protocol>://<gatewayId>/<rawDeviceAddress>(#<subsystemId>)
```

Dans laquelle les champs suivants sont présents :
protocol : identifiant du protocole local de dispositif natif;
gatewayld : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemld : ce champ optionnel indique une identification, par exemple un rang du sous-système (démarrant par exemple à 1), si un tel sous-système est présent.

### Exemples:

### 1. knx://0201-0001-1234/1.1.3

Cet identifiant unique de dispositif DURL correspond à un dispositif D communiquant par le protocole KNX avec une adresse individuelle 1.1.3 accessible par l'unité centrale de commande U portant l'identifiant #0201-0001-1234.

### 2. io://0201-0001-1234/145036#2

Cet identifiant unique d'un dispositif DURL correspond à un sous-système portant le n°2 associé à un dispositif D communiquant par le protocole io homecontrol avec une adresse radio 145036 accessible par l'unité centrale de commande U portant l'identifiant #0201-0001-1234.

Les manipulations des données relatives aux dispositifs D au niveau du serveur Sv sont réalisées par un processus ou service d'exécution ES. Afin de stocker les données relatives aux différentes instances de dispositif D mentionnées ci-dessus, le service d'exécution peut avoir accès à une base de données d'instances IDB. Bien entendu, ces différents types d'instances peuvent être stockés également de façon séparée. Par ailleurs, par base de données, on entend ici un mode de stockage approprié pour un ensemble d'instances, qui peuvent être mémorisées dans une liste, un arbre ou des tables ou tout autre structure de données appropriée.

La présente invention concerne plus particulièrement la prise en compte d'expressions conditionnelles CE distribuées.

Une expression conditionnelle CE définit :
- au moins une évaluation d'une condition Cnd portant sur au moins une variable d'état S d'au moins un dispositif domotique D et/ou sur le temps et/ou la date,et
- au moins un déclenchement conditionnel d'au moins une action Ac.

Par action Ac, il peut être compris exécution d'au moins un commande C définie optionnellement dans l'expression conditionnelle CE ; ou encore déclenchement d'un scénario Sc ou d'un groupe de commandes C communiquées à l'unité centrale de commande U et identifié par un identifiant de groupe de commande ou de scénario.

Une expression conditionnelle CE est considérée comme distribuée aussitôt qu'elle s'étend sur plusieurs éléments d'un système, les éléments étant constitués par des unités centrales de commandes ou un serveur / une unité de gestion :
- Soit la condition Cnd dépend de variables d'état S relatives à des dispositifs domotiques D qui sont gérées par de multiples unités centrales de commandes U indépendantes ;
- Soit les actions Ac s'étendent sur des dispositifs domotiques D multiples rattachés à de multiples unités centrales de commande U ;
- Soit la condition Cnd dépend d'au moins une variable d'état S relative à au moins un dispositif domotique D rattaché à au moins une première unité centrale de commande U1 et les effets/actions concernent au moins un autre dispositif domotique rattaché à une autre unité électronique de commande U2.

Différents types d'expressions conditionnelles CE peuvent être considérés.

Un premier type correspond à une expression conditionnelle CE temporelle, la condition correspondante pouvant être vérifiée une seule fois, ou de façon récurrente. A titre d'exemple, une condition n'étant réalisée qu'une seule fois peut correspondre à une instruction du type « exécute dans 15 minutes ». A titre d'exemple, une condition récurrente peut correspondre à une condition du type « exécute tous les Lundis à 8h00 ».

Un deuxième type d'expression conditionnelle est basée sur au moins une valeur de variable d'état S. A titre d'exemple une expression conditionnelle basée sur une variable d'état peut être du type « exécute l'action Ac si la température est en dessous de 19°C ». Dans le cadre de ce deuxième type de module, l'expression conditionnelle peut également comprendre une période de temps d'activation. A titre d'exemple, une telle expression conditionnelle peut être : « exécute l'action Ac si la température est inférieure à 19°C entre 10h00 et 19h00 pendant le weekend ».

Les unités centrales de commande U peuvent présenter différents niveaux de support SL pour les types d'expressions conditionnelles CE :
- Un support complet de l'expression conditionnelle : évaluation des conditions Cnd et déclenchement des actions Ac;
- Un support complet pour l'évaluation des conditions Cnd ;
- Un support pour l'évaluation des conditions Cnd basées sur les valeurs de variables d'état S seulement ;
- Un support pour l'évaluation des conditions temporelles seulement;
- Un support pour l'exécution des actions Ac seulement;
- Un support pour l'envoi de messages de notification à destination de l'unité de gestion Sv, indiquant que la condition Cnd est remplie ;
- Un support pour l'envoi de messages de commande ou de notification à destination d'autres unités centrales de commande, aptes à exécuter des action Ac. Avantageusement, ces messages et leurs destinataires peuvent être définis par l'unité de gestion Sv lors de l'étape de génération du module de code logiciel. Dans ce cas, l'unité centrale de commande envoyant le message de commande ou de notification déclenche l'action sans avoir besoin de connaître le rattachement des dispositifs domotiques ou l'action à exécuter ;
- Aucun support.

Ce niveau de support SL doit être connu par le serveur Sv pour gérer de façon appropriée l'évaluation de la condition Cnd et ses effets comme cela sera décrit ultérieurement. Le niveau de support est usuellement dépendant du type d'unité centrale de commande U et/ou de leur version logicielle.

Les différents éléments de l'expression conditionnelle CE, à savoir la condition Cnd et les actions Ac, peuvent être définis :
- Sous forme de portions de langage de programmation interprétable ;
- sous forme de code source d'un langage de programmation compilable ; une étape supplémentaire de compilation pour le processeur cible est nécessaire dans ce cas.
- sous forme précompilée pour une machine virtuelle ; la machine virtuelle doit être implémentée sur l'entité Sv, U destinée à exécuter l'élément et un chargement de l'élément sur la machine virtuelle doit être effectué préalablement à l'exécution.
- Sous forme binaire ou exécutable, comme une suite d'instructions en langage machine du processeur cible; dans ce cas, les tables de conversion peuvent contenir le code source qui est compilé par l'unité de gestion Sv , pour un processeur destiné à exécuter le code ; les caractéristiques du processeur doivent être connues à l'avance ; pour pouvoir exécuter ce fragment de code logiciel, l'entité qui exécute le code, par exemple l'unité de commande U ou l'unité de gestion Sv doivent disposer préalablement de l'interface de programmation permettant l'appel du fragment de code généré. Le code binaire/exécutable généré peut être intégré sous forme de librairie(s), dans le logiciel exécutable par l'unité de commande U.

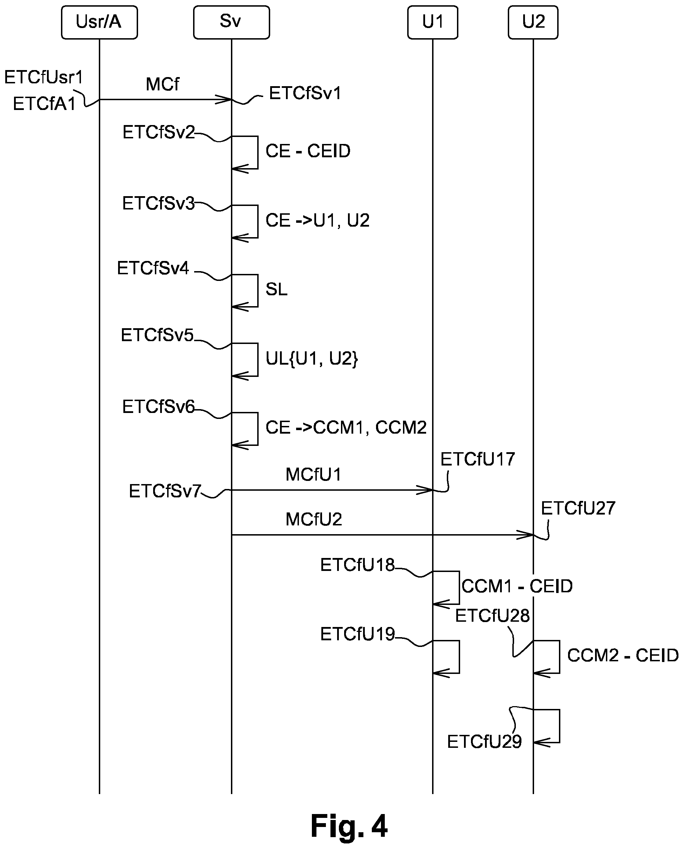

Un procédé de configuration d'une installation domotique 17 d'un bâtiment 1 exécuté par un serveur Sv connecté à l'au moins une installation domotique 17 va être à présent décrit en référence à la figure 4.

Dans une première étape ETCfSv1, le serveur reçoit un message de configuration MCf comprenant une définition d'une expression conditionnelle CE en provenance d'un utilisateur Usr ou d'une application A s'exécutant sur le serveur Sv ou sur une autre unité de gestion connectée. L'expression conditionnelle CE définit au moins une évaluation de condition Cnd portant sur au moins une variable d'état S d'au moins un dispositif domotique D et/ou sur le temps et/ou la date, et au moins un déclenchement conditionnel d'au moins une action Ac concernant au moins un dispositif domotique de l'installation domotique.

Ensuite, Dans une étape ETCfSv2, l'expression conditionnelle CE est enregistrée sur le serveur Sv en lien avec une entité représentative St de l'installation 17. La définition de l'expression conditionnelle CE est toujours conservée sur le serveur pour se référer à celle-ci ultérieurement. Cet enregistrement est réalisé en lien avec un identifiant d'expression conditionnelle CEID.

Dans une phase ultérieure du procédé, le serveur Sv détermine si l'expression conditionnelle CE doit être prise en charge du côté serveur ou doit être distribuée, au moins partiellement, sur des unités centrales de commande U de l'installation.

A cet effet, le serveur exécute les étapes suivantes.

Dans une étape ETCfSv3, le serveur détermine les unités centrales de commande U1, U2 impliquées dans l'expression conditionnelle CE et/ou les actions.

En particulier, le serveur Sv considère qu'une unité centrale de commande U1, U2 est impliquée si :
- Au moins une des variables d'état S d'un des dispositifs domotiques D rattaché à ladite unité centrale de commande U1, U2 est utilisé dans la condition Cnd ; ou
- Au moins un des dispositifs domotiques D rattaché à ladite unité centrale de commande U1, U2 est utilisé dans une action Ac.

Dans une étape ETCfSv4, pour chaque unité centrale de commande sélectionnée U1, U2, le serveur détermine le niveau de support SL fourni pour le type d'expression conditionnelle CE considéré.

Dans une étape ETCfSv5, en utilisant l'information de niveau de support SL, le serveur Sv sélectionne les unités centrales de commande U qui sont capables de participer à la gestion de l'expression conditionnelle CE dans une liste UL.

Il existe des cas spécifiques pour lesquelles l'expression conditionnelle CE doit être géré au moins partiellement côté serveur :
- Si la condition dépend de valeurs de variables d'état de dispositifs rattachés à des unités centrales de commande distinctes étant donné que, selon une possibilité, les unités centrales de commande ne communiquent pas entre elles. Dans ce cas, l'unité centrale de commande fournissant un support pour l'évaluation de la condition Cnd envoie au serveur/à l'unité de gestion un message de notification indiquant que la condition est remplie ou signalant un événement de changement de valeur pour au moins une des variables d'état dont dépend la condition. Le serveur propage ensuite les évènements de changement de valeur de variable d'états ou la notification de condition remplie aux autres unités centrales de commande d'une même installation.
- Selon une autre possibilité, les unités centrales de commande peuvent communiquer entre elles. Dans ce cas :
   - le module de code logiciel conditionnel CCM1 généré par l'unité de gestion/serveur pour l'unité centrale de commande en charge de l'évaluation de la condition comprend une définition d'un message de notification ou commande Mnc à envoyer par cette unité centrale de commande à destination d'une autre unité centrale de commande, en charge de l'exécution de l'action ; et
   - le module de code logiciel conditionnel CCM2 généré par l'unité de gestion/serveur pour l'autre unité centrale de commande, en charge de l'exécution de l'action, comprend une définition de l'action Ac à exécuter sur réception du message de commande ou notification.
- Si aucune des unités centrales de commandes impliquées ne présentent de support pour le type d'expression conditionnelle CE considéré, c'est-à-dire que les étapes précédentes n'ont permis de sélectionner aucune unité centrale de commande U.

Nous pouvons ici considérer l'exemple suivant. Une expression conditionnelle CE du type « exécution des actions Ac si la température T1 est supérieure à 21°C » est définie, la température T1 correspondant à une variable d'état S d'un dispositif D de type capteur de température rattaché à une première unité centrale de commande U1. Les actions Ac définies dans ce module de commande sont :
- AcU1 : éteindre un système de chauffage, qui est un dispositif domotique rattaché à la première unité centrale de commande U1 ;
- AcU2 : déclencher une commande sur un ensemble de stores extérieurs qui sont des dispositifs domotiques rattachés à une deuxième unité centrale de commande U2.

Il apparait que dans cet exemple, la première unité centrale de commande U1 est à même d'évaluer la condition Cnd , pour autant qu'elle présente un niveau de support suffisant pour évaluer des expressions basées sur des variables d'état S. Cette unité de commande sera également apte à exécuter l'action AcU1. En conséquence, l'évaluation de la condition et la réalisation de l'action AcU1 peuvent être déportés sur ladite première unité centrale de commande. En revanche, la deuxième action ne peut être déportée sur la première unité centrale de commande U1, mais sur la deuxième unité centrale de commande U2. Dans cet exemple les unités centrales de commande U1, U2 ne communiquent pas entre elles.

Sur la base de ces règles, le serveur réalise dans une étape ETCfSv6 une génération d'au moins un module de code logiciel conditionnel CCM. En particulier, un module de code logiciel conditionnel est généré pour chaque unité centrale de commande U, U1, U2 comprise dans la liste UL, chaque module étant agencé pour réaliser l'évaluation de la partie de l'expression conditionnelle CE affectée à l'unité centrale de commande, et/ou pour déclencher une action Ac et/ou optionnellement pour émettre au moins une notification à destination de l'unité de gestion et/ou d'une autre unité centrale de commande U, U1, U2. Nous supposerons ici que deux modules de code logiciel conditionnel CCM1 et CCM2 sont générés, destinés respectivement à la première unité centrale de commande U1 et à la deuxième unité centrale de commande U2.

Dans une phase suivante du procédé, le serveur réalise une étape ETCfSv7 d'envoi de l'au moins un module de code logiciel conditionnel CCM1, CCM2 aux unités centrales de commande U1, U2 sélectionnées lors de la phase précédente du procédé décrite ci-dessus, dans un message de configuration MCfU1, MCfU2, optionnellement en lien avec un identifiant d'expression conditionelle CEID.

Dans une étape ETCfU17, l'unité centrale de commande U1 reçoit le premier module de code logiciel conditionnel CCM1.

Suite à la réception de cette définition, l'unité centrale U1 réalise les étapes suivantes.

Dans une étape ETCfU18, la première unité centrale de commande U1 stocke localement la définition du module de code logiciel conditionnel CCM1 en lien avec l'identifiant de l'expression conditionelle CEID.

Dans une étape ETCfU19, la première unité centrale de commande est configurée pour exécuter ultérieurement le module de code logiciel conditionnel CCM1, c'est à dire:
- Ré-évaluer la condition Cnd de l'expression conditionnelle CE localement lorsque nécessaire, cette expression pouvant être basée sur un compteur de temps ou sur des valeurs de variables d'état S relatives à des dispositifs D rattachés à la première unité centrale de commande U1, comme dans l'exemple évoqué ci-dessus ;
- Exécuter une partie des actions de l'expression conditionnelle CE définies dans le module de code logiciel conditionnel CCM1 lorsque la condition Cnd est validée ; la partie correspondante des actions correspond aux actions qui s'appliquent à des dispositifs rattachés à l'unité centrale de commande U1; Cela correspond à l'action AcU1 dans l'exemple mentionné ci-dessus.
- Notifier le serveur que la condition Cnd de l'expression conditionnelle CE comprise dans le module de code logiciel conditionnel CCM1 a été validée et que la ou les actions AcU1 ont été déclenchées.

Dans une étape ETCfU27, la deuxième unité centrale de commande U2 reçoit la définition du module de code logiciel conditionnel CCM2.

Suite à la réception de cette définition, l'unité centrale de commande U2 réalise les étapes suivantes.

Dans une étape ETCfU28, la deuxième unité centrale de commande U2 stocke localement la définition du module de code logiciel conditionnel CCM2 en lien avec l'identifiant de l'expression conditionelle CEID.

Dans une étape ETCfU29, l'unité centrale de commande U2 est configurée pour exécuter ultérieurement le module de code logiciel conditionnel CCM2, c'est à dire :
- Exécuter une partie des actions de l'expression conditionnelle CE définies dans le module de code logiciel conditionnel CCM2 lorsque la condition Cnd est validée et qu'un message en ce sens est communiqué par le serveur Sv à l'unité centrale de commande U2; la partie correspondante des actions correspond aux actions qui s'appliquent à des dispositifs rattachés à l'unité centrale de commande U2 ; Cela correspond à l'action AcU2 dans l'exemple mentionné ci-dessus.
- Notifier le serveur que l'action AcU2 a été déclenchée.

Selon une plusieurs variantes ou modes de mises en oeuvre, les unités centrales de commandes U1, U2 peuvent communiquer entre elles. Dans ce cas, l'expression conditionnelle CE peut être gérée différemment. Pour rappel, l'expression conditionnelle CE considérée dans l'exemple précèdent est « exécution des actions AcU1 et AcU2 si la température T1 est supérieure à 21°C »; la température T1 correspond à une variable d'état S d'un dispositif D de type capteur de température rattaché à une première unité centrale de commande U1, qui est donc à même d'évaluer la condition Cnd. Les actions Ac définies dans ce module de commande sont :
- AcU1 : éteindre un système de chauffage, qui est un dispositif domotique rattaché à la première unité centrale de commande U1, qui est donc apte à exécuter l'action AcU1.
- AcU2 : déclencher une commande sur un ensemble de stores extérieurs qui sont des dispositifs domotiques rattachés à une deuxième unité centrale de commande U2, apte à exécuter la deuxième action AcU2.

Les modules de code conditionnel CCM1,CCM2 générés par le serveur seront différents des ceux de l'exemple précèdent en ce qui concerne la transmission de l'information que la condition Cnd est validée. Plusieurs modes de mise en oeuvre peuvent être considérés dans ce contexte.

Selon un premier mode de mise en oeuvre, le code CCM1 destiné à la première unité centrale de commande U1 contient, en plus des instructions nécessaires pour l'évaluation de la condition Cnd et de l'exécution de l'action AcU1, des instructions pour l'envoi d'un message de notification directement à destination de la deuxième unité centrale de commande U2 pour indiquer que la condition Cnd de l'expression conditionnelle CE comprise dans le module de code logiciel conditionnel CCM1 a été validée.

Le code CCM2 destiné à la deuxième unité centrale de commande U2 contient dans ce cas des instructions pour l'exécution de l'action AcU2, sur réception d'un message de notification indiquant que la condition Cnd est validée.

Selon un deuxième mode de mise en oeuvre, la condition Cnd est remplie si la valeur de la variable d'état S est égale à une valeur V définie dans la condition. Le code CCM1 peut comprendre des instructions pour l'envoi d'un message de notification directement à destination de la deuxième unité centrale de commande U2 pour indiquer explicitement que la valeur de la variable d'état S est égale à V. Ce cas d'utilisation est particulièrement avantageux si la deuxième unité centrale de commande U2 est apte à enregistrer un scénario Scn pouvant être déclenché si la valeur de la variable d'état S (dans notre exemple la température) est égale à V.

Le scénario Scn peut être transmis dans le module CCM2 ou enregistré préalablement dans la deuxième unité de commande U2. Dans cette deuxième hypothèse, il n'est pas nécessaire de générer un module de code logiciel conditionnel spécifique CCM2.

Selon un troisième mode de mise en oeuvre, le code CCM1 destiné à la première unité centrale de commande U1 contient des instructions pour l'envoi d'un message de commande explicite à destination de la deuxième unité centrale de commande U2, en vue de l'exécution de l'action AcU2, par exemple « baisser l'ensemble des stores extérieurs ». Dans ce cas, il n'est pas nécessaire de générer un module de code logiciel conditionnel spécifique CCM2.

Il est à noter que dans les trois modes de mise en oeuvre décrits ci-dessus, la génération des modules de code conditionnels CCM1, CCM2 par serveur SV, qui a la connaissance des rattachement des dispostifs aux unités de commande, des fonctionnalités de chaque unité de commande, des commandes et des paramètres à envoyer à chaque dispositif domotique, permet d'utiliser des unités de commande plus simples et donc moins coûteuses.

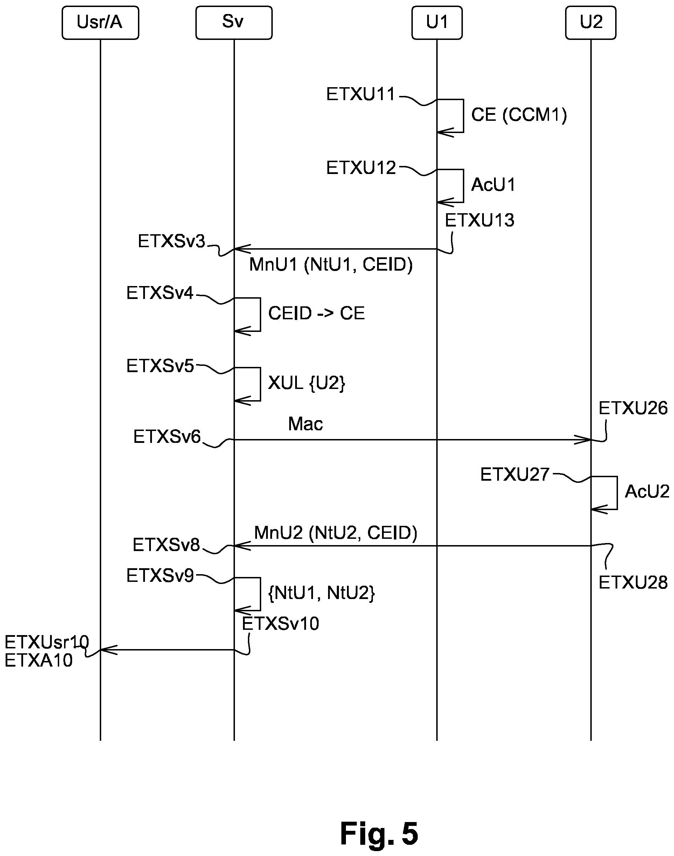

Un procédé de contrôle d'une installation va à présent être décrit en référence à la figure 5.

Lorsque les actions de l'expression conditionnelle CE s'étendent sur de multiples dispositifs D rattachés à de multiples unités centrales de commande U, le serveur peut devoir propager l'exécution de ces effets aux unités centrales de commande qui ne connaissent pas la définition de l'expression conditionnelle CE.

Les situations suivantes doivent en particulier être considérées :
- La condition Cnd de l'expression conditionnelle est dépendante d'une valeur de variable d'état S : dans ce cas la condition Cnd sera seulement évaluée par la seule unité centrale de commande qui possède la définition du module de code logiciel conditionnel CCM1. Dans l'exemple ci-dessus, la condition Cnd ne peut être évaluée que par la première unité centrale de commande U1 ;
- Si la condition Cnd est basée sur le temps seulement, mais que certaines unités centrales de commande n'offrent pas de support pour les modules de code logiciel conditionnel CCM basés sur le temps.

Dans les deux cas, une partie des effets doit être propagée par le serveur à d'autres unités centrales de commande.

Dans le cas considéré sur la figure 5, nous supposerons que la condition Cnd de l'expression conditionnelle porte sur une variable d'état S relative à un dispositif D rattaché à l'unité centrale de commande U1, et que les actions déclenchées concernent un dispositif domotique rattaché à l'unité centrale de commande U1 et un dispositif domotique rattaché à l'unité centrale de commande U2, sur la base de l'exemple d'expression conditionnelle CE décrite pour le procédé de configuration décrit en référence à la figure 4.

Dans une étape ETXU11, l'unité centrale de commande U1 réévalue la condition Cnd comme cela est défini dans le module de code logiciel CCM1, cette condition pouvant être basée sur un compteur de temps ou sur des valeurs de variables d'état S relatives à des dispositifs D rattachés à l'unité centrale de commande U1 ;
Dans une étape ETXU12, lorsque la condition Cnd est validée, l'unité centrale de commande exécute une partie des actions AcU1 de l'expression conditionnelle CE définies dans le module de code logiciel conditionnel CCM1, à savoir les actions qui s'appliquent à des dispositifs rattachés à l'unité centrale de commande U1 ;
Dans une étape ETXU13, l'unité de commande U1 envoie une notification NtU1 au serveur Sv, par exemple sous forme d'un message de notification MnU1 indiquant que la condition Cnd de l'expression conditionnelle CE a été validée et optionnellement que ses actions ont été déclenchées, le serveur recevant ce message de notification dans une étape ETXSv3. Le message de notification comprend l'identifiant de l'expression conditionnelle CEID.

Dans une étape ETXSv4, le serveur identifie la définition complète de l'expression conditionnelle CE préalablement stockée grâce à l'identifiant d'expression conditionnelle CEID fourni dans le message de notification MN.

Dans une étape ETXSv5, le serveur détermine une sélection d'unités centrales de commande impliquées XUL dans les actions de l'expression conditionnelle CE seulement. Lors de cette étape, l'unité centrale de commande U1 émettrice de la notification NtU1 est exclue de la liste. Dans le cas d'une condition Cnd de l'expression conditionnelle CE qui serait seulement basée sur le temps, seules les unités centrales qui n'ont pas de support pour l'évaluation des expressions conditionnelles CE basées sur le temps sont conservées dans la sélection.

Dans une étape ETXSv6, Le serveur envoie ensuite des messages d'action MAc aux unités centrales de commande sélectionnées pour produire les effets restants qui étaient configurées en lien avec cette expression conditionnelle CE. Dans l'exemple illustré sur la figure 5, un message d'action MAc est envoyé à l'unité de commande U2 qui le reçoit dans une étape ETXU26. Le message d'action MAc peut comprendre l'identifiant de l'expression conditionnelle CEID.

Dans une étape ETXU27, l'unité centrale de commande U2 exécute la ou les actions AcU2 correspondant au message d'action reçu, en lien par exemple avec un dispositif domotique D qui lui est rattaché.

Dans une étape ETXU28, l'unité centrale de commande U2 envoie une notification NtU2 dans un message de notification MNU2, en lien avec l'identifiant de l'expression conditionnelle CEID afin de rendre compte du déroulement de l'action, le serveur recevant ce message de notification dans une étape ETXSv8.

Dans une étape ETXSv9, le serveur détermine un résultat des actions de l'expression conditionnelle CE, en aggrégant les notifications reçues dans les différents messages de notification reçus MNU1, MNU2, sur la base de l'identifiant unique de l'expression conditionnelle CEID. A cet effet, il est possible par exemple pour l'unité centrale U1 exécutant l'évaluation de la condition Cnd d'adjoindre un identifiant d'exécution à l'identifiant unique d'expression conditionnelle CEID pour différencier les différentes exécutions de ce module, cet identifiant d'exécution étant propagé au serveur puis autres unités centrales de commande concernées dans les messages de notification ou d'action. Alternativement ou en complément, dans le cas d'une condition temporelle, une référence au temps de déclenchement peut être utilisée pour aggréger les résultats.

Ce résultat peut être communiqué ou consulté par un utilisateur ou par une application tierce dans une étape ETXUsr10, respectivement ETXA10.

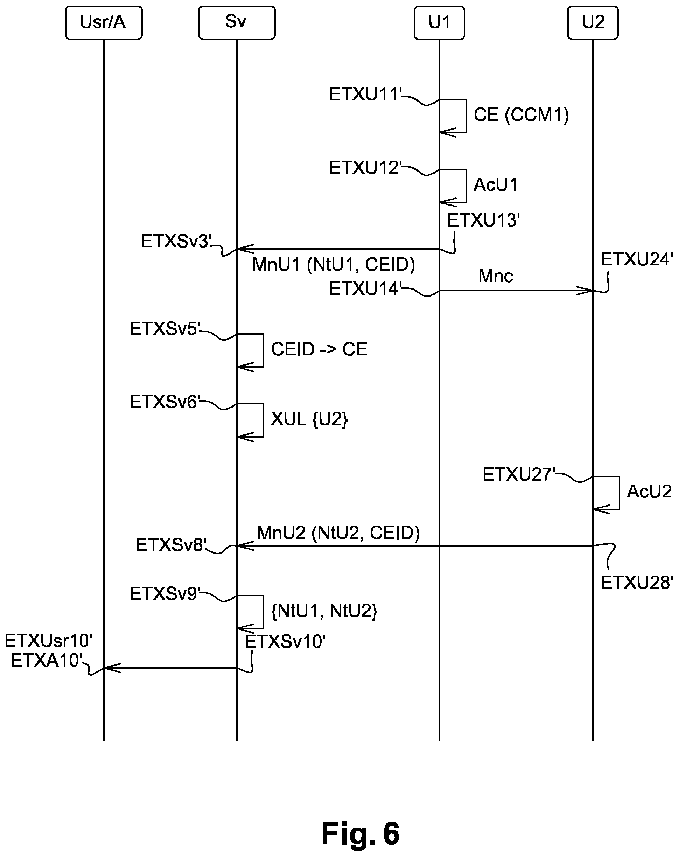

Une variante du procédé de contrôle d'une installation va à présent être décrit en référence à la figure 6. Cette variante correspond au cas où les unités centrales de commande communiquent entre elles. Seulement les différences par rapport à l'exemple précèdent seront détaillées ci-dessous.

Les étapes ETXU11' et ETXU12' sont similaires aux étapes ETXU11 et ETXU12.

Dans l'étape ETXU13', l'unité de commande U1 envoie une notification NtU1 au serveur Sv, par exemple sous forme d'un message de notification MnU1 indiquant seulement que ses actions ont été déclenchées, le serveur recevant ce message de notification dans une étape ETXSv3'. Le message de notification comprend l'identifiant de l'expression conditionnelle CEID.

Dans une étape ETXU14', la première unité centrale de commande U1 envoie un message de notification ou de commande Mnc à destination de l'unité centrale de commande U2 qui le reçoit dans une étape ETXU24'. Ce message comprend, selon les cas d'utilisation, une indication que la condition Cnd est remplie, une indication qu'un changement de valeur de la variable d'état S a eu lieu, une requête d'exécution d'un scénario ou d'un groupe de commande identifié par un identifiant de scénario ou de groupe de commande, ou encore explicitement une commande ou un groupe de commandes à exécuter.

Par la suite, les étapes ETXU27' et ETXU28' sont similaires aux étapes ETXU27 et ETXU28 décrite dans le mode de mise en oeuvre de la figure 5, comme les étapes ultérieures mises en oeuvre par le serveir ETXSv8' et suivantes.

Il est à noter que le serveur Sv n'est plus impliqué dans l'évaluation de la condition Cnd ou dans le déclenchement des actions AcU1, AcU2. Outre l'avantage déjà mentionné, de distribution de la charge de calcul, cette variante du procédé de contrôle présente l'avantage supplémentaire d'assurer un bon fonctionnement de l'installation même en cas de coupure Internet.

Le serveur peut toujours procéder aux aggrégations des notifications d'exécution, comme décrit dans l'exemple précedent.

Dans le procédé représenté en figure 5 ou en figure 6, l'agrégation des messages de notification permet de mettre à jour les données enregistrées dans la base de données d'instance IDB liée à l'entité représentative St. Ainsi, le Serveur dispose d'une vision à jour de l'état des dispositifs domotiques.

Grâce à ces dispositions, une meilleure expérience utilisateur est obtenue, car le serveur est en mesure de présenter l'exécution des actions de l'expression conditionnelle CE comme un unique groupe de commandes cohérent, de la même façon que l'aurait été une exécution de commande immédiate, même si celui-ci est divisé et propagé à de multiples unités centrales de commande.

## Revendications

1. Procédé de configuration d'une installation domotique (17), comprenant une pluralité de dispositifs domotiques (D) et une pluralité d'unités centrales de commande (U, U1, U2); le procédé étant exécuté par une unité de gestion (Sv) ou par un terminal mobile (T) connecté(e) à l'installation domotique (17) et **caractérisé en ce qu'**il comprend les étapes suivantes :
i. Réception (ETCfSv1) d'un message de configuration (MCf) en provenance d'un utilisateur (Usr) ou d'une application (A) s'exécutant sur l'unité de gestion (Sv) ou sur une autre unité de gestion connectée, le message (Mcf) comprenant une définition d'une expression conditionnelle (CE) définissant
- une évaluation d'au moins une condition (Cnd) portant sur :
- au moins une variable d'état (S) d'au moins un dispositif domotique (D) et/ou
- au moins un temps ou une date ;
et
- un déclenchement conditionnel d'au moins une action (Ac, AcU1, AcU2);
ii. Détermination (ETCfSv5) d'une liste (UL) comprenant au moins une unité centrale de commande (U, U1, U2) apte
- à évaluer l'au moins une condition (Cnd) et/ou
- à déclencher l'au moins une action (Ac, AcU1, AcU2) ;
iii. Génération (ETCfSv6) d'au moins un module de code logiciel conditionnel (CCM) permettant, lors de son exécution par l'au moins une unité centrale de commande (U, U1, U2) comprise dans la liste (UL), l'évaluation de l'au moins une condition (Cnd) et/ou le déclenchement de l'au moins une action (Ac, AcU1, AcU2);
iv. Envoi (ETCfSv7) d'au moins un message de configuration (MCfU1, MCfU2) comprenant une définition de l'au moins un module de code logiciel conditionnel (CCM) à l'au moins une unité centrale de commande (U, U1, U2) comprise dans la liste (UL).

2. Procédé selon la revendication 1, comprenant en outre une étape d'Enregistrement (ETCfSv2) de l'expression conditionnelle (CE) en lien avec un identifiant d'expression conditionnelle (CEID), et dans lequel l'étape d'envoi (ETCfSv7) de l'au moins un message de configuration (MCfU1, MCfU2) comprenant la définition de l'au moins un module de code logiciel conditionnel (CCM) est exécutée en lien avec l'identifiant d'expression conditionnelle (CEID).

3. Procédé selon l'une des revendications 1 ou 2, dans lequel, l'unité de gestion (Sv) détermine qu'une unité centrale de commande (U, U1, U2) est apte à évaluer l'au moins une condition (Cnd) ou à exécuter l'au moins une action (Ac, AcU1, AcU2) si :
- Au moins une des variables d'état (S) d'un des dispositifs domotiques (D) rattaché à ladite unité centrale de commande (U1, U2) est utilisé dans la condition (Cnd) ; ou
- Au moins un des dispositifs domotiques (D) rattaché à ladite unité centrale de commande (U1, U2) est utilisé dans l'au moins une action (Ac, AcU1, AcU2).

4. Procédé selon l'une des revendications 1 à 3, comprenant en outre une étape de détermination (ETCfSv4) d'un niveau de support (SL) fourni par l'au moins une unité centrale de commande (U) pour un type du module de code logiciel conditionnel (CCM) ; et dans lequel
- la génération (ETCfSv5) de l'au moins un module de code logiciel conditionnel (CCM) est effectuée sur la base du niveau de support (SL).

5. Procédé de configuration d'une installation domotique (17), comprenant une pluralité de dispositifs domotiques (D) et une pluralité d'unités centrales de commande (U, U1, U2); le procédé étant exécuté par l'au moins une unité centrale de commande (U, U1, U2) et **caractérisé en ce qu'**il comprend les étapes suivantes :
Réception (ETCfU17, ETCfU27) d'un message de configuration (MCfU1, MCfU2), le message de configuration (MCfU1, MCfU2) ayant été envoyé (ETCfSv7) par une unité de gestion (Sv) ou d'un terminal mobile (T) connecté à l'installation domotique (17) suite à la réception (ETCfSv1) d'un message de configuration (MCf) en provenance d'un utilisateur (Usr) ou d'une application (A) s'exécutant sur l'unité de gestion (Sv) ou sur une autre unité de gestion connectée, le message (Mcf) en provenance de l'utilisateur (Usr) ou de l'application (A) comprenant une définition d'une expression conditionnelle (CE) définissant
- une évaluation d'au moins une condition (Cnd) portant sur :
- au moins une variable d'état (S) d'au moins un dispositif domotique (D) et/ou
- au moins un temps ou une date ; et
- un déclenchement conditionnel d'au moins une action (Ac, AcU1, AcU2),
le message de configuration (MCfU1, MCfU2) comprenant une définition d'un module de code logiciel conditionnel (CCM, CCM1, CCM2), le module de code logiciel conditionnel (CCM, CCM1, CCM2) ayant été généré (ETCfSv6) par l'unité de gestion (Sv) ou par le terminal mobile (T) connecté(e) à l'installation domotique (17) et permettant lors de son exécution :
- une évaluation d'au moins une condition (Cnd) portant sur
- au moins une variable d'état (S) d'au moins un dispositif domotique (D) rattaché à l'au moins une unité centrale de commande (U, U1, U2) et/ou
- au moins un temps ou une date;
et/ou
- un déclenchement conditionnel d'au moins une action (Ac, AcU1, AcU2);
i. Enregistrement (ETCfU18, ETCfU28) du module de code logiciel conditionnel (CCM, CCM1, CCM2) ;
ii. Configuration (ETCfU19, ETCfU29) de l'unité centrale de commande (U, U1, U2) de façon à :
- évaluer l'au moins une condition (Cnd) ; et/ou
- déclencher l'au moins une action (Ac, AcU1, AcU2) lorsque l'au moins une condition (Cnd) est validée suite à l'évaluation.

6. Procédé de configuration selon la revendication précédente dans lequel l'au moins une unité de commande (U) est configurée de façon à envoyer un message de notification à destination de l'unité de gestion (Sv) ou du terminal mobile (T) indiquant que l'au moins une condition (Cnd) du module de code logiciel conditionnel CCM a été validée et/ou que la ou les actions (AcU1, AcU2) ont été déclenchées.

7. Procédé de configuration selon une des revendications 5 ou 6 étant exécuté par une première unité centrale de commande (U, U1, U2), dans lequel le message de configuration (MCfU1, MCfU2) comprend
- une définition d'au moins un message de notification ou de commande (Mnc); et
- au moins un identifiant d'une deuxième unité centrale de commande (U2) de l'installation domotique (17),
et dans lequel la première unité centrale de commande (U) est configurée de façon à envoyer le message de notification ou de commande (Mnc) à destination de la deuxième unité centrale de commande (U2), lorsque l'au moins une condition (Cnd) a été validée.

8. Procédé de contrôle d'une installation domotique (17), l'installation domotique (17) comprenant une pluralité de dispositifs domotiques (D), et une pluralité d'unités centrales de commande (U1, U2) ; le procédé étant exécuté par une unité centrale de commande (U1, U2),
le procédé comprenant les étapes suivantes :
o. Mise en oeuvre du procédé de configuration selon l'une des revendications 5 à 7 ;
i. Evaluation (ETXU11, ETXU11') de l'au moins une condition (Cnd) ; et/ou
ii. Exécution (ETXU12, ETXU27, ETXU12', ETXU27') de l'au moins une action (AcU1, AcU2) définie par le module de code logiciel conditionnel (CCM). ;

9. Procédé de contrôle selon la revendication 8, dans lequel le module de code logiciel conditionnel (CCM, CCM1, CCM2) est préalablement enregistré en lien avec un identifiant d'expression conditionnelle (CEID) ; et
comprenant en outre une étape d'envoi (ETXU13, ETXU28) d'un message de notification (MnU1, MnU2) à destination d'une unité de gestion (Sv) indiquant que l'au moins une condition (Cnd) du module de code logiciel conditionnel (CCM) a été validée lors de son évaluation et/ou que l'au moins une action (AcU1, AcU2) a été exécutée, en lien avec l'identifiant d'expression conditionnelle (CEID).

10. Procédé de contrôle selon une des revendications 8 ou 9, dans lequel une première unité centrale de commande (U1) a été préalablement configurée pour réaliser l'évaluation de l'au moins une condition, le procédé comprenant en outre une étape (ETXU14') d'envoi d'un message de notification ou de commande (Mnc) à destination d'une deuxième unité centrale de commande (U2) de l'installation par la première unité centrale de commande (U1), lorsque l'au moins une condition (Cnd) a été validée par la première unité centrale de commande (U1.

11. Procédé de contrôle d'une installation domotique (17), l'installation domotique (17) comprenant une pluralité de dispositifs domotiques (D), et une pluralité d'unités centrales de commande (U1, U2) ; le procédé étant exécuté par une unité de gestion (Sv) ou par un terminal (T) connecté(e) à l'au moins une installation domotique (17), et comprenant les étapes suivantes :
o. Mise en oeuvre du procédé de configuration selon l'une des revendications 1 à 4 ;
i. Réception (ETXSv3) d'un message de notification (MnU1, MnU2) en provenance d'une unité centrale de commande émettrice (U1, U2) indiquant que l'au moins une condition (Cnd) de l'expression conditionnelle (CE) a été validée et/ou que l'au moins une action (AcU1, AcU2) a été exécutée ;
ii. Identification (ETXSv4) d'une définition complète de l'expression conditionnelle (CE);
iii. Détermination (ETXSv5) d'une sélection (XUL) d'unités centrales de commande (U, U1, U2) impliquées dans l'au moins une action (Ac, AcU1, Acu2) de l'expression conditionnelle (CE) ;
iv. Envoi (ETXSv6) d'au moins un message d'action (Mac) à au moins une unité centrale de commande (U, U1, U3) comprise dans la sélection (XUL) en vue du déclenchement d'une action (AcU1, ACU2) sur un dispositif domotique (D) rattaché à ladite unité centrale de commande (U, U1, U2).

12. Procédé selon la revendication 11, dans lequel le message de notification reçue à l'étape i fournit un identifiant (CEID) de l'expression conditionnelle (CE) ; et dans lequel la définition complète de l'expression conditionnelle (CE) est préalablement stockée en lien avec l'identifiant (CEID), l'identification (ETXSv4) d'une définition complète de l'expression conditionnelle (CE) pouvant être réalisée grâce à l'identifiant (CEID) de l'expression conditionnelle (CE) fourni dans le message de notification (MNU1, MnU2)

13. Procédé selon la revendication 12, dans lequel le message d'action (Mac) envoyé à l'étape iv comprend l'identifiant (CEID) de l'expression conditionnelle (CE) le procédé comprenant en outre l'étape suivante :
- Détermination (ETXSv9), d'un résultat de l'au moins une action (AcU1, AcU2), en aggrégant une pluralité de notifications reçues dans une pluralité de messages de notification reçus (MNU1, MNU2), sur la base de l'identifiant unique (CEID) de l'expression conditionnelle (CE).

14. Produit programme d'ordinateur comprenant des instructions de code agencées pour mettre en oeuvre les étapes d'un procédé selon l'une quelconque des revendications 1 à 13, lorsque ledit programme est exécuté par un processeur d'une unité de gestion (Sv) ou d'une unité centrale de commande (U1, U2).

15. Système comprenant une unité de gestion (Sv) ou un terminal mobile (T) agencé(e) pour exécuter le procédé selon l'une des revendications 1 à 4 ou de 11 à 13, de façon connectée à au moins une unité centrale de commande (U) d'une installation domotique (17), l'au moins une unité centrale de commande (U) étant agencée pour exécuter le procédé selon l'une des revendications 5 à 10.

## Patentansprüche

1. Verfahren zum Konfigurieren einer Heimautomatisierungsanlage (17), die eine Vielzahl von Heimautomatisierungsvorrichtungen (D) und eine Vielzahl von zentralen Steuereinheiten (U, U1, U2) umfasst; wobei das Verfahren von einer Verwaltungseinheit (Sv) oder von einem mobilen Endgerät (T) ausgeführt wird, die/das mit der Heimautomatisierungsanlage (17) verbunden ist, und **dadurch gekennzeichnet ist, dass** es die folgenden Schritte umfasst:
i. Empfangen (ETCfSv1) einer Konfigurationsnachricht (MCf), die von einem Benutzer (Usr) oder von einer Anwendung (A) stammt, welche auf der Verwaltungseinheit (Sv) oder auf einer anderen verbundenen Verwaltungseinheit ausgeführt wird, wobei die Nachricht (Mcf) eine Definition eines bedingten Ausdrucks (CE) umfasst, der
- eine Beurteilung von mindestens einer Bedingung (Cnd), die sich auf:
-- mindestens eine Zustandsvariable (S) von mindestens einer Heimautomatisierungsvorrichtung (D), und/oder
-- mindestens eine Zeit oder ein Datum bezieht;
und
- ein bedingtes Auslösen von mindestens einer Aktion (Ac, AcU1, AcU2) definiert;
ii. Bestimmen (ETCfSv5) einer Liste (UL), die mindestens eine zentrale Steuereinheit (U, U1, U2) umfasst, die
- die mindestens eine Bedingung (Cnd) beurteilen und/oder
- die mindestens eine Aktion (Ac, AcU1, AcU2) auslösen kann;
iii. Erzeugen (ETCfSv6) von mindestens einem bedingten Softwarecodemodul (CCM), das bei seiner Ausführung durch die mindestens eine in der Liste (UL) umfasste zentrale Steuereinheit (U, U1, U2) die Beurteilung der mindestens einen Bedingung (Cnd) und/oder das Auslösen der mindestens einen Aktion (Ac, AcU1, AcU2) ermöglicht;
iv. Senden (ETCfSv7) von mindestens einer Konfigurationsnachricht (MCfU1, MCfU2), die eine Definition des mindestens einen bedingten Softwarecodemoduls (CCM) umfasst, an die mindestens eine zentrale Steuereinheit (U, U1, U2), die in der Liste (UL) umfasst ist.

2. Verfahren nach Anspruch 1, das weiter einen Schritt des Aufzeichnens (ETCfSv2) des bedingen Ausdrucks (CE) in Verbindung mit einer Kennung des bedingten Ausdrucks (CEID) umfasst, und wobei der Schritt des Sendens (ETCfSv7) der mindestens einen Konfigurationsnachricht (MCfU1, MCfU2), die die Definition des mindestens einen bedingten Softwarecodemoduls (CCM) umfasst, in Verbindung mit der Kennung des bedingten Ausdrucks (CEID) ausgeführt wird.

3. Verfahren nach einem der Ansprüche 1 oder 2, wobei die Verwaltungseinheit (Sv) bestimmt, dass eine zentrale Steuereinheit (U, U1, U2) die mindestens eine Bedingung (Cnd) beurteilen oder die mindestens eine Aktion (Ac, AcU1, AcU2) ausführen kann, wenn:
- mindestens eine der Zustandsvariablen (S) einer der Heimautomatisierungsvorrichtungen (D), die an die zentrale Steuereinheit (U1, U2) angebunden sind, in der Bedingung (Cnd) verwendet wird; oder
- mindestens eine der Heimautomatisierungsvorrichtungen (D), die an die zentrale Steuereinheit (U1, U2) angebunden sind, in der mindestens einen Aktion (Ac, AcU1, AcU2) verwendet wird.

4. Verfahren nach einem der Ansprüche 1 bis 3, das weiter einen Schritt des Bestimmens (ETCfSv4) eines Unterstützungsgrades (SL) umfasst, der von der mindestens einen zentralen Steuereinheit (U) für einen Typ des bedingten Softwarecodemoduls (CCM) bereitgestellt wird; und wobei
- das Erzeugen (ETCfSv5) des mindestens einen bedingten Softwarecodemoduls (CCM) auf der Basis des Unterstützungsgrades (SL) ausgeführt wird.

5. Verfahren zum Konfigurieren einer Heimautomatisierungsanlage (17), die eine Vielzahl von Heimautomatisierungsvorrichtungen (D) und eine Vielzahl von zentralen Steuereinheiten (U, U1, U2) umfasst; wobei das Verfahren von der mindestens einen zentralen Steuereinheit (U, U1, U2) ausgeführt wird und **dadurch gekennzeichnet ist, dass** es die folgenden Schritte umfasst:
Empfangen (ETCfU17, ETCfU27) einer Konfigurationsnachricht (MCfU1, MCfU2), wobei die Konfigurationsnachricht (MCfU1, MCfU2) von einer Verwaltungseinheit (Sv) oder von einem mobilen Endgerät (T), das mit der Heimautomatisierungsanlage (17) verbunden ist, im Anschluss an den Empfang (ETCfSv1) einer Konfigurationsnachricht (MCf) gesendet (ETCfSv7) wurde, die von einem Benutzer (Usr) oder von einer Anwendung (A) stammt, welche auf der Verwaltungseinheit (Sv) oder auf einer anderen verbundenen Verwaltungseinheit ausgeführt wird, wobei die vom Benutzer (Usr) oder von der Anwendung (A) stammende Nachricht (Mcf) eine Definition eines bedingten Ausdrucks (CE) umfasst, der
- eine Beurteilung von mindestens einer Bedingung (Cnd), die sich auf:
-- mindestens eine Zustandsvariable (S) von mindestens einer Heimautomatisierungsvorrichtung (D), und/oder
-- mindestens eine Zeit oder ein Datum bezieht; und
- ein bedingtes Auslösen von mindestens einer Aktion (Ac, AcU1, AcU2) definiert;
wobei die Konfigurationsnachricht (MCfU1, MCfU2) eine Definition eines bedingten Softwarecodemoduls (CCM, CCM1, CCM2) umfasst, wobei das bedingte Softwarecodemodul (CCM, CCM1, CCM2) von der Verwaltungseinheit (Sv) oder von dem mobilen Endgerät (T) erzeugt (ETCfSv6) wurde, die/das mit der Heimautomatisierungsanlage (17) verbunden ist, und bei seiner Ausführung:
- eine Beurteilung von mindestens einer Bedingung (Cnd), die sich auf
-- mindestens eine Zustandsvariable (S) von mindestens einer Heimautomatisierungsvorrichtung (D), die an die mindestens eine zentrale Steuereinheit (U, U1, U2) angebunden ist, und/oder
-- mindestens eine Zeit oder ein Datum bezieht;
und/oder
- ein bedingtes Auslösen von mindestens einer Aktion (Ac, AcU1, AcU2) ermöglicht;
i. Aufzeichnen (ETCfU18, ETCfU28) des bedingten Softwarecodemoduls (CCM, CCM1, CCM2);
ii. Konfigurieren (ETCfU19, ETCfU29) der zentralen Steuereinheit (U, U1, U2) so, dass sie:
- die mindestens eine Bedingung (Cnd) beurteilt; und/oder
- die mindestens eine Aktion (Ac, AcU1, AcU2) auslöst, wenn die mindestens eine Bedingung (Cnd) infolge der Beurteilung validiert wird.

6. Konfigurationsverfahren nach dem vorstehenden Anspruch, wobei die mindestens eine Steuereinheit (U) so konfiguriert ist, dass sie eine Mitteilungsnachricht an die Verwaltungseinheit (Sv) oder an das mobile Endgerät (T) sendet, die anzeigt, dass die mindestens eine Bedingung (Cnd) des bedingten Softwarecodemoduls CCM validiert wurde und/oder dass die Aktion(en) (AcU1, AcU2) ausgelöst wurden.

7. Konfigurationsverfahren nach einem der Ansprüche 5 oder 6, das von einer ersten zentralen Steuereinheit (U, U1, U2) ausgeführt wird, wobei die Konfigurationsnachricht (MCfU1, MCfU2) umfasst
- eine Definition von mindestens einer Mitteilungs- oder Steuernachricht (Mnc); und
- mindestens eine Kennung einer zweiten zentralen Steuereinheit (U2) der Heimautomatisierungsanlage (17),
und wobei die erste zentrale Steuereinheit (U) so konfiguriert ist, dass sie die Mitteilungs- oder Steuernachricht (Mnc) an die zweite zentrale Steuereinheit (U2) sendet, wenn die mindestens eine Bedingung (Cnd) validiert wurde.

8. Verfahren zum Steuern einer Heimautomatisierungsanlage (17), wobei die Heimautomatisierungsanlage (17) eine Vielzahl von Heimautomatisierungsvorrichtungen (D) und eine Vielzahl von zentralen Steuereinheiten (U1, U2) umfasst; wobei das Verfahren von einer zentralen Steuereinheit (U1, U2) ausgeführt wird,
wobei das Verfahren die folgenden Schritte umfasst:
o. Umsetzen des Konfigurationsverfahrens nach einem der Ansprüche 5 bis 7;
i. Beurteilen (ETXU11, ETXU11') der mindestens einen Bedingung (Cnd); und/oder
ii. Ausführen (ETXU12, ETXU27, ETXU12', ETXU27') der mindestens einen vom bedingten Softwarecodemodul (CCM) definierten Aktion (AcU1, AcU2).

9. Steuerungsverfahren nach Anspruch 8, wobei das bedingte Softwarecodemodul (CCM, CCM1, CCM2) zuvor in Verbindung mit einer Kennung des bedingten Ausdrucks (CEID) aufgezeichnet wird; und
weiter einen Schritt des Sendens (ETXU13, ETXU28) einer Mitteilungsnachricht (MnU1, MnU2) an eine Verwaltungseinheit (Sv) umfassend, die anzeigt, dass die mindestens eine Bedingung (Cnd) des bedingten Softwarecodemoduls (CCM) bei seiner Beurteilung validiert wurde und/oder dass die mindestens eine Aktion (AcU1, AcU2) in Verbindung mit der Kennung des bedingten Ausdrucks (CEID) ausgeführt wurde.

10. Steuerungsverfahren nach einem der Ansprüche 8 oder 9, wobei eine erste zentrale Steuereinheit (U1) zuvor dafür konfiguriert wurde, die Beurteilung der mindestens einen Bedingung auszuführen, wobei das Verfahren weiter einen Schritt (ETXU14') des Sendens einer Mitteilungs- oder Steuernachricht (Mnc) an eine zweite zentrale Steuereinheit (U2) der Anlage durch die erste zentrale Steuereinheit (U1) umfasst, wenn die mindestens eine Bedingung (Cnd) von der ersten zentralen Steuereinheit (U1) validiert wurde.

11. Verfahren zum Steuern einer Heimautomatisierungsanlage (17), wobei die Heimautomatisierungsanlage (17) eine Vielzahl von Heimautomatisierungsvorrichtungen (D) und eine Vielzahl von zentralen Steuereinheiten (U1, U2) umfasst; wobei das Verfahren von einer Verwaltungseinheit (Sv) oder von einem Endgerät (T) ausgeführt wird, die/das mit der mindestens einen Heimautomatisierungsanlage (17) verbunden ist, und die folgenden Schritte umfasst:
o. Umsetzen des Konfigurationsverfahrens nach einem der Ansprüche 1 bis 4;
i. Empfangen (ETXSv3) einer von einer sendenden zentralen Steuereinheit (U1, U2) stammenden Mitteilungsnachricht (MnU1, MnU2), die angibt, dass die mindestens eine Bedingung (Cnd) des bedingten Ausdrucks (CE) validiert wurde und/oder dass die mindestens eine Aktion (AcU1, AcU2) ausgeführt wurde;
ii. Identifizieren (ETXSv4) einer vollständigen Definition des bedingten Ausdrucks (CE);
iii. Bestimmen (ETXSv5) einer Auswahl (XUL) von zentralen Steuereinheiten (U, U1, U2), die an der mindestens einen Aktion (Ac, AcU1, Acu2) des bedingten Ausdrucks (CE) beteiligt sind;
iv. Senden (ETXSv6) von mindestens einer Aktionsnachricht (Mac) an mindestens eine in der Auswahl (XUL) umfasste zentrale Steuereinheit (U, U1, U3) im Hinblick auf das Auslösen einer Aktion (AcU1, ACU2) auf einer Heimautomatisierungsvorrichtung (D), die an die zentrale Steuereinheit (U, U1, U2) angebunden ist.

12. Verfahren nach Anspruch 11, wobei die im Schritt i empfangene Mitteilungsnachricht eine Kennung (CEID) des bedingten Ausdrucks (CE) bereitstellt; und wobei die vollständige Definition des bedingten Ausdrucks (CE) zuvor in Verbindung mit der Kennung (CEID) gespeichert wird, wobei das Identifizieren (ETXSv4) einer vollständigen Definition des bedingten Ausdrucks (CE) dank der in der Mitteilungsnachricht (MNU1, MnU2) bereitgestellten Kennung (CEID) des bedingten Ausdrucks (CE) ausgeführt werden kann.

13. Verfahren nach Anspruch 12, wobei die im Schritt iv gesendete Aktionsnachricht (Mac) die Kennung (CEID) des bedingten Ausdrucks (CE) umfasst, wobei das Verfahren weiter den folgenden Schritt umfasst:
- Bestimmen (ETXSv9) eines Ergebnisses der mindestens einen Aktion (AcU1, AcU2) durch Aggregieren einer Vielzahl von Mitteilungen, die in einer Vielzahl von empfangenen Mitteilungsnachrichten (MNU1, MNU2) empfangen werden, auf der Basis der eindeutigen Kennung (CEID) des bedingten Ausdrucks (CE).

14. Computerprogrammprodukt, das Codeanweisungen umfasst, die dafür eingerichtet sind, die Schritte eines Verfahrens nach einem der Ansprüche 1 bis 13 umzusetzen, wenn das Programm von einem Prozessor einer Verwaltungseinheit (Sv) oder von einer zentralen Steuereinheit (U1, U2) ausgeführt wird.

15. System, das eine Verwaltungseinheit (Sv) oder ein mobiles Endgerät (T) umfasst, die/das dafür eingerichtet ist, das Verfahren nach einem der Ansprüche 1 bis 4 oder 11 bis 13 mit mindestens einer zentralen Steuereinheit (U) einer Heimautomatisierungsanlage (17) verbunden auszuführen, wobei die mindestens eine zentrale Steuereinheit (U) dafür eingerichtet ist, das Verfahren nach einem der Ansprüche 5 bis 10 auszuführen.

## Claims

1. A method for configuring a home automation installation (17), comprising a plurality of home automation devices (D) and a plurality of central control units (U, U1, U2); the method being executed by a management unit (Sv) or by a mobile terminal (T) connected to the home automation installation (17) and **characterized in that** it comprises the following steps:
i. Receiving (ETCfSv1) a configuration message (MCf) coming from a user (Usr) or an application (A) running on the management unit (Sv) or on another connected management unit, the message (Mcf) comprising a definition of a conditional expression (CE) defining
- an evaluation of at least one condition (Cnd) relating to:
- at least one state variable (S) of at least one home automation device (D) and / or
- at least one time or date;
and
- a conditional triggering of at least one action (Ac, AcU1, AcU2);
ii. Determining (ETCfSv5) a list (UL) comprising at least one central control unit (U, U1, U2) capable of
- evaluating the at least one condition (Cnd) and / or
- triggering the at least one action (Ac, AcU1, AcU2);
iii. Generating (ETCfSv6) at least one conditional software code module (CCM) allowing, when executed by the at least one central control unit (U, U1, U2) comprised in the list (UL), to evaluate the at least one condition (Cnd) and / or to trigger the at least one action (Ac, AcU1, AcU2);
iv. Sending (ETCfSv7) at least one configuration message (MCfU1, MCfU2) comprising a definition of the at least one conditional software code module (CCM) to the at least one central control unit (U, U1, U2) comprised in the list (UL),

2. The method according to claim 1, further comprising a step of saving (ETCfSv2) the conditional expression (CE) in connection with a conditional expression identifier (CEID), and wherein the step of sending (ETCfSv7) the at least one configuration message (MCfU1, MCfU2) comprising the definition of the at least one conditional software code module (CCM) is executed in connection with the conditional expression identifier (CEID).

3. The method according to any of claims 1 or 2, wherein, the management unit (Sv) determines that a central control unit (U, U1, U2) is capable of evaluating the at least one condition (Cnd) or executing the at least one action (Ac, AcU1, AcU2) if:
- At least one of the state variables (S) of one of the home automation devices (D) attached to said central control unit (U1, U2) is used in the condition (Cnd); or
- At least one of the home automation devices (D) attached to said central control unit (U1, U2) is used in the at least one action (Ac, AcU1, AcU2).

4. The method according to any of claims 1 to 3, further comprising a step of determining (ETCfSv4) a support level (SL) provided by the at least one central control unit (U) for a type of conditional software code module (CCM); and wherein
- The generation (ETCfSv5) of the at least one conditional software code module (CCM) is carried out on the basis of the support level (SL).

5. The method for configuring a home automation installation (17), comprising a plurality of home automation devices (D) and a plurality of central control units (U, U1, U2); the method being executed by the at least one central control unit (U, U1, U2) and **characterized in that** it comprises the following steps:
Receiving (ETCfU17, ETCfU27) a configuration message (MCfU1, MCfU2), the configuration message (MCfU1, MCfU2) having been sent (ETCfSv7) by a management unit (Sv) or a mobile terminal (T) connected to the home automation installation (17) after receiving (ETCfSv1) a configuration message (MCf) coming from a user (Usr) or an application (A) running on the management (Sv) or on another connected management unit, the message (Mcf) coming from the user (Usr) or the application (A) comprising a definition of a conditional expression (CE) defining
- an evaluation of at least one condition (Cnd) relating to:
- at least one state variable (S) of at least one home automation device (D) and / or
- at least one time or date; and
- a conditional triggering of at least one action (Ac, AcU1, AcU2),
the configuration message (MCfU1, MCfU2) comprising a definition of a conditional software code module (CCM, CCM1, CCM2), the conditional software code module (CCM, CCM1, CCM2) having been generated (ETCfSv6) by the management unit (Sv) or by the mobile terminal (T) connected to the home automation installation (17) and allowing, when executed:
- an evaluation of at least one condition (Cnd) relating to
- at least one state variable (S) of at least one home automation device (D) attached to the at least one central control unit (U, U1, U2) and / or
- at least one time or date;
and / or
- a conditional triggering of at least one action (Ac, AcU1, AcU2);
i. Saving (ETCfU18, ETCfU28) the conditional software code module (CCM, CCM1, CCM2);
ii. Configuring (ETCfU19, ETCfU29) the central control unit (U, U1, U2) so as to:
- evaluate the at least one condition (Cnd); and / or
- trigger the at least one action (Ac, AcU1, AcU2) when the at least one condition (Cnd) is validated after the evaluation.

6. The configuration method according to the preceding claim wherein the at least one control unit (U) is configured so as to send a notification message to the management unit (Sv) or the mobile terminal (T) indicating that the at least one condition (Cnd) of the conditional software code module CCM has been validated and / or that the action(s) (AcU1, AcU2) have been triggered.

7. The configuration method according to any of claims 5 or 6 being executed by a first central control unit (U, U1, U2), wherein the configuration message (MCfU1, MCfU2) comprises
- a definition of at least one notification or control message (Mnc); and
- at least one identifier of a second central control unit (U2) of the home automation installation (17),
and wherein the first central control unit (U) is configured so as to send the notification or control message (Mnc) to the second central control unit (U2), when the at least one condition (Cnd) has been validated.

8. A method for monitoring a home automation installation (17), the home automation installation (17) comprising a plurality of home automation devices (D), and a plurality of central control units (U1, U2); the method being executed by a central control unit (U1, U2),
the method comprising the following steps:
o Implementing the configuration method according to any of claims 5 to 7;
i. Evaluating (ETXU11, ETXU11') the at least one condition (Cnd); and / or
ii. Executing (ETXU12, ETXU27, ETXU12', ETXU27') the at least one action (AcU1, AcU2) defined by the conditional software code module (CCM).

9. The monitoring method according to claim 8, wherein the conditional software code module (CCM, CCM1, CCM2) is previously saved in connection with a conditional expression identifier (CEID); and
further comprising a step of sending (ETXU13, ETXU28) a notification message (MnU1, MnU2) to a management unit (Sv) indicating that the at least one condition (Cnd) of the conditional software code module (CCM) has been validated during its evaluation and / or that the at least one action (AcU1, AcU2) has been executed, in connection with the conditional expression identifier (CEID).

10. The monitoring method according to any of claims 8 or 9, wherein a first central control unit (U1) has been previously configured to perform the evaluation of the at least one condition, the method further comprising a step (ETXU14') of sending a notification or control message (Mnc) to a second central control unit (U2) of the installation by the first central control unit (U1), when the at least one condition (Cnd) has been validated by the first central control unit (U1).

11. The method for monitoring a home automation installation (17), the home automation installation (17) comprising a plurality of home automation devices (D), and a plurality of central control units (U1, U2); the method being executed by a management unit (Sv) or by a terminal (T) connected to the at least one home automation installation (17), and comprising the following steps:
∘ Implementing the configuration method according to any of claims 1 to 4;
i. Receiving (ETXSv3) a notification message (MnU1, MnU2) coming from an emitting central control unit (U1, U2) indicating that the at least one condition (Cnd) of the conditional expression (CE) has been validated and / or that the at least one action (AcU1, AcU2) has been executed;
ii. Identifying (ETXSv4) a complete definition of the conditional expression (CE);
iii. Determining (ETXSv5) a selection (XUL) of central control units (U, U1, U2) involved in the at least one action (Ac, AcU1, AcU2) of the conditional expression (CE);
iv. Sending (ETXSv6) at least one action message (Mac) to at least one central control unit (U, U1, U3) comprised in the selection (XUL) in order to trigger an action (AcU1, AcU2) on a home automation device (D) attached to said central control unit (U, U1, U2).

12. The method according to claim 11, wherein the notification message received in step i provides an identifier (CEID) of the conditional expression (CE); and wherein the complete definition of the conditional expression (CE) is previously stored in connection with the identifier (CEID), the identification (ETXSv4) of a complete definition of the conditional expression (CE) can be performed thanks to the identifier (CEID) of the conditional expression (CE) provided in the notification message (MNU1, MnU2).

13. The method according to claim 12, wherein the action message (Mac) sent in step iv comprises the identifier (CEID) of the conditional expression (CE) the method further comprising the following step:
- Determining (ETXSv9), a result of the at least one action (AcU1, AcU2), by aggregating a plurality of received notifications in a plurality of received notification messages (MNU1, MNU2), on the basis of the unique identifier (CEID) of the conditional expression (CE).

14. A computer program product comprising code instructions arranged to implement the steps of a method according to any one of claims 1 to 13, when said program is executed by a processor of a management unit (Sv) or of a central control unit (U1, U2).

15. A system comprising a management unit (Sv) or a mobile terminal (T) arranged to execute the method according to any of claims 1 to 4 or 11 to 13, by being connected to at least one central unit control unit (U) of a home automation installation (17), the at least one central control unit (U) being arranged to execute the method according to any of claims 5 to 10.
